# EUROPÄISCHE PATENTSCHRIFT

(11) **EP 1 201 496 B1**
(45) Veröffentlichungstag und Bekanntmachung des Hinweises auf die Patenterteilung: **12.12.2007**
(21) Anmeldenummer: 01122707.1
(22) Anmeldetag: 21.09.2001
(51) Int. Cl.: B60P 3/42, B62D 47/00, B60R 5/04

(54) **Kraftfahrzeug mit einem Steilheck**
Estate car
Voiture break

(30) Priorität: 26.10.2000 DE 10053093
(43) Veröffentlichungstag der Anmeldung: 02.05.2002
(73) Patentinhaber: Bayerische Motoren Werke Aktiengesellschaft, 80809 München (DE)
(72) Erfinder: Minatti, Johann, 80935 Muenchen (DE); Nurtsch, Bernd, 83536 Gars (DE)

(56) Entgegenhaltungen:
- DE-A- 3 909 397
- DE-A- 19 616 118
- FR-A- 2 803 565
- US-A- 2 997 336

## Beschreibung

Die Erfindung betrifft ein Kraftfahrzeug mit einem Steilheck gemäß dem Oberbegriff des Anspruchs 1.

Aus der US 2,997,336 A ist ein Kraftfahrzeug bekannt, das am Heckbereich des Daches einen beweglichen Dachabschnitt aufweist, so dass sich eine große Beladungsöffnung ergibt. Der bewegliche Dachabschnitt ist in Führungen geführt, die in fest angeordneten Seitenwand-Abschnitten der Karosserie ausgebildet sind.

Aus der DE 196 16 118 A ist ein Kraftfahrzeug nach dem Oberbegriff des Anspruchs 1 bekannt, das ein abnehmbares Hardtop aufweist.

Aus der DE 30 25 145 A1ist bereits ein Personenkraftwagen mit einem veränderbaren Heck bekannt. Bei diesem Kraftfahrzeug kann der Heckbereich in ein Stufenheck und ein Steilheck mit einer Heckklappe verändert werden.

Aufgabe der Erfindung ist es, ein Kraftfahrzeug mit einem Steilheck zu schaffen, dessen Heckbereich veränderbar ist.

Diese Aufgabe wird durch die Merkmale des Anspruchs 1 gelöst.

Bei dem erfindungsgemäßen Kraftfahrzeug ist im Heckbereich ein Hardtop vorgesehen, das abnehmbar ist. Dadurch ist eine einfache Beladung eines Kofferraumes des Kraftfahrzeuges möglich, wenn das Hardtop entfernt ist. Das Hardtop ist mit einem verschiebbaren Dachteil versehen, so dass auch mit einem am Kraftfahrzeug befindlichen Hardtop eine einfache Beladung des Kofferraumes möglich ist. Ferner kann das Kraftfahrzeug mit einem geöffneten Dachteil offen gefahren werden.

In einer vorteilhaften Ausführungsform sind die den Kofferraum begrenzenden Seitenfenster und/oder die Heckscheibe versenkbar ausgebildet.

Ein Dachabschnitt, der oberhalb der vor dem Kofferraum befindlichen Sitzreihe in einer Karosserie des Kraftfahrzeuges ausgebildet ist, dient vorteilhafterweise als ein Überrollschutz. Der Dachabschnitt ist zu diesem Zweck entsprechend geformt und/oder versteift.

In einer vorteilhaften Ausführungsform ist zwischen dem Kofferraum und einem davor befindlichen Fahrzeuginnenraum ein Trennelement vorgesehen. Das Trennelement kann fest oder lösbar an der Karosserie des Kraftfahrzeuges angeordnet sein. Vorteilhafterweise ist ein solches Trennelement eine durchsichtige Scheibe oder ein Trenn-Netz.

Vorteilhafterweise kann das Absenken der Seitenfenster und/oder der Heckscheibe und/oder das Verschieben des Dachteiles automatisch und/oder manuell erfolgen.

Eine Ausführungsform der Erfindung wird nachstehend anhand der Zeichnungen beispielshalber beschrieben. Dabei zeigen:
- Fig. 1: eine perspektivische Ansicht eines Heckbereichs eines Kraftfahrzeuges mit einem Steilheck, wobei der Kofferraum durch ein Hardtop nach oben hin abgedeckt ist,
- Fig. 2: den Heckbereich des in der Fig. 1 gezeigten Kraftfahrzeuges, wobei eine Heckscheibe geöffnet ist,
- Fig. 3: den Heckbereich des in der Fig. 1 gezeigten Kraftfahrzeuges, wobei die Heckscheibe in einem Hohlraum der Heckklappe abgesenkt ist und ein am Hardtop befindliches Dachteil nach vorne geschoben ist, so dass ein Dachausschnitt geöffnet ist und
- Fig. 4: den Heckbereich des in der Fig. 1 gezeigten Kraftfahrzeuges, bei dem das Hardtop entfernt ist.

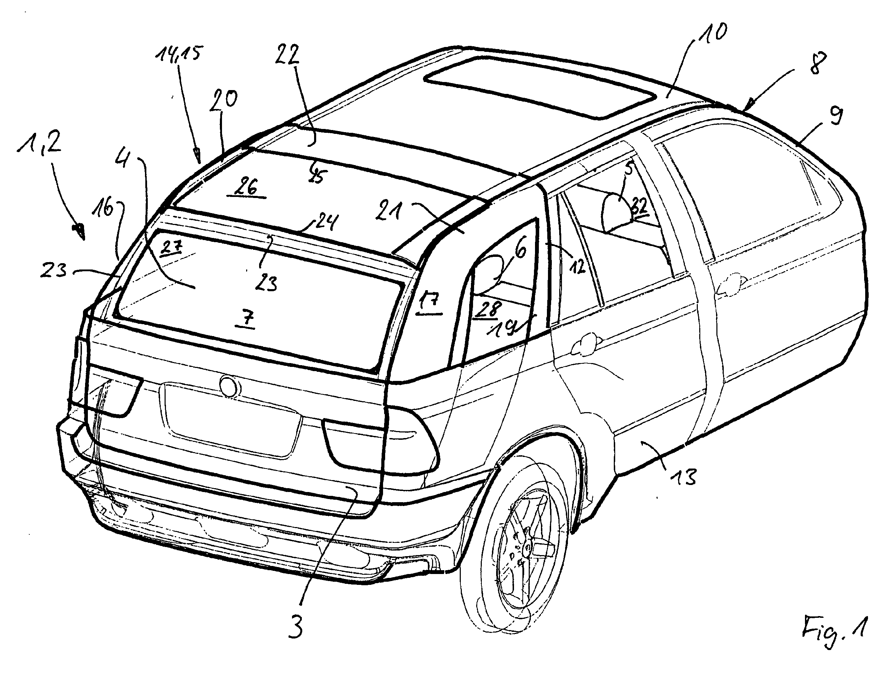

Die Fig. 1 zeigt ein Kraftfahrzeug 1 mit einem Steilheck 2. Am Steilheck 2 ist eine Heckklappe 3 mit einer Heckscheibe 4 vorgesehen. Das in der Fig. 1 gezeigte Kraftfahrzeug 1 weist zwei Sitzreihen 5 und 6 auf. An die hintere Sitzreihe 6 schließt sich ein Kofferraum 7 an. Eine Karosserie 8 des Kraftfahrzeuges 1 weist einen an einem Seitenrahmen 9 der Karosserie 8 befestigten Dachabschnitt 10 auf. Dieser Dachabschnitt 10 beginnt an einer nicht dargestellten Windschutzscheibe und endet in Höhe der hinteren Sitzreihe 6. Zwei Säulen 11 und 12 des Seitenrahmens 9 verbinden den Dachabschnitt 10 mit einem unteren Abschnitt 13 des jeweiligen Seitenrahmens 9.

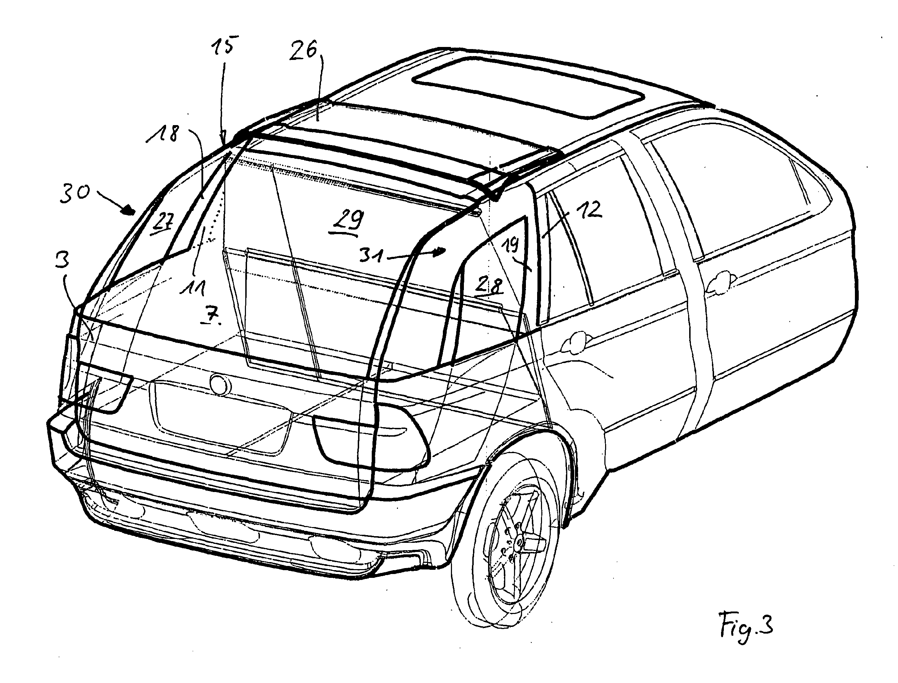

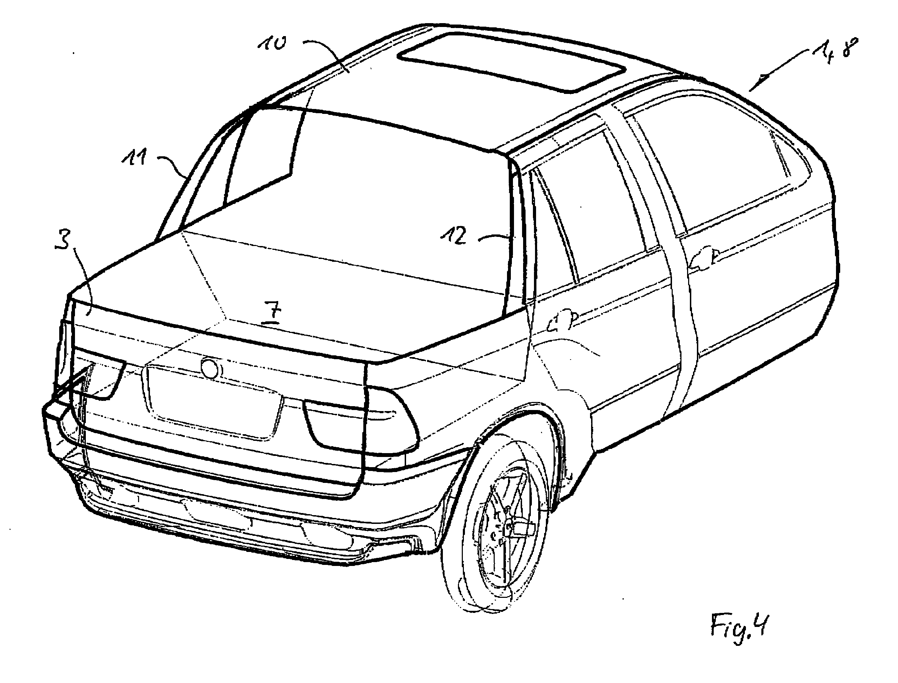

Wie aus einem Vergleich der Fig. 1 und 4 hervorgeht, wird ein oberer Heckbereich 14 des Kraftfahrzeuges 1 durch ein Hardtop 15 gebildet, das den Kofferraum 7 überdeckt. In der gezeigten Ausführungsform besteht das Hardtop 15 beidseitig aus Seitenwand-Abschnitten 30, 31, die jeweils einen hinteren Säulenabschnitt 16, 17 und einen vorderen Säulenabschnitt 18, 19 aufweisen. Die hinteren und vorderen Säulenabschnitte 16, 17; 18, 19 sind jeweils durch einen oberen in etwa waagrecht verlaufenden Seitenabschnitt 20, 21 miteinander verbunden. Ferner besteht eine feste Verbindung zwischen den Seitenabschnitten 20, 21 in Höhe der vorderen Säulenabschnitte 18, 19 durch einen Dachabschnitt 22. Diese einstückig miteinander verbundene Struktur des Hardtopes 15 ist auch aus der Fig. 3 ersichtlich.

Zwischen den beiden hinteren Säulenabschnitten 16, 17 des Hardtopes 15 ist ein Scheibenrahmen 23 angeordnet, der die Heckscheibe 4 aufnimmt. Zwischen einem dachseitigen Rand 24 des Scheibenrahmens 23 und einem heckseitigen Rand 25 des Dachabschnittes 22 des Hardtopes 15 ist in der gezeigten Ausführungsform ein verschiebbares Dachteil 26 vorgesehen, das seitlich durch die Seitenabschnitte 20 und 21 der Seitenwand- Abschnitte 30, 31 des Hardtopes 15 begrenzt ist. Zwischen den hinteren und vorderen Säulenabschnitten 16, 17; 18, 19 ist jeweils ein Seitenfenster 27, 28 vorgesehen.

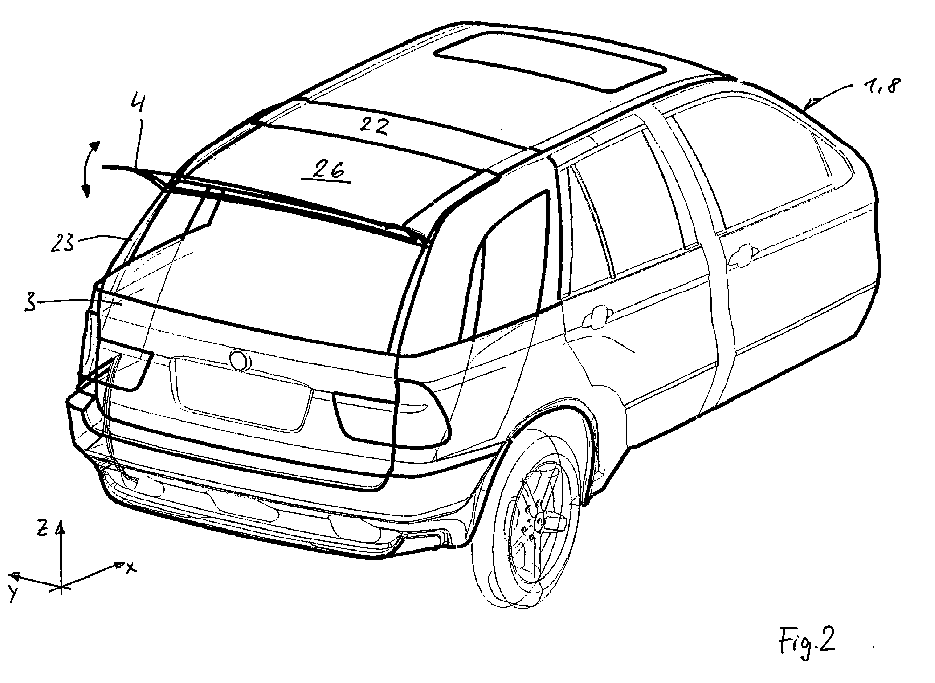

Aus der Fig. 2 geht hervor, dass die Heckscheibe 4 der Heckklappe 3 nach oben, in Richtung des beweglichen Dachteiles 26 verschwenkbar ist. Der Scheibenrahmen 23 ist nur in z-Richtung verschiebbar.

Entsprechend der Fig. 3 ist die Heckscheibe 4 mit dem Rahmen 23 in einen nicht dargestellten Hohlraum der Heckklappe 3 versenkbar. Das verschiebbare Dachteil 26 ist nach vorne verschoben und befindet sich oberhalb des vorderen Säulenabschnittes 18, 19 des Hardtopes 15 bzw. der Säulen 11 und 12 der Karosserie 8. Ferner können die beiden Seitenfenster 27 und 28 in einen nicht dargestellten Hohlraum der Karosserie 8 abgesenkt sein. Zum Schutz von Fahrzeuginsassen und/oder zur Abtrennung des Kofferraumes 7 vom restlichen Fahrzeuginnenraum 32 ist zwischen der hinteren Sitzreihe 6 und dem Kofferraum 7 ein Trennelement 29 vorgesehen. Ein solches Trennelement 29 kann eine durchsichtige Scheibe oder ein Trenn-Netz sein. Ein solches Trenn-Netz kann beispielsweise von einem Rollo abwickelbar sein. Die Fig. 4 zeigt ein Kraftfahrzeug 1, bei dem das Hardtop 15 entfernt ist. Bei diesem Kraftfahrzeug 1 ist der Kofferraum 7 nach oben hin offen.

## Patentansprüche

1. Kraftfahrzeug mit einem Steilheck (2), wobei das Steilheck (2) eine Heckklappe (3) aufweist, die mit einem Heckfenster (4) versehen ist, mit einem Kofferraum (7), mit einem Dach (10, 22, 26) und mit einem Seitenrahmen (9), der einen oberen Bereich und einen unteren Bereich aufweist, wobei das Dach (10, 22, 26) über Säulen (11, 12; 16, 17) des oberen Bereiches mit dem unteren Bereich des Seitenrahmens (9) verbunden ist, wobei der Kofferraum (7) durch ein abnehmbares Hardtop (15) überdeckt ist, das einen Dachabschnitt (22) und zwei daran angeordnete Seitenwand-Abschnitte (30, 31) aufweist,
**dadurch gekennzeichnet, dass** das Hardtop (15) mit einem nach vorne auf den Dachabschnitt (22) verschiebbaren Dachteil (26) versehen ist.

2. Kraftfahrzeug nach den Ansprüchen 1 oder 2,
**dadurch gekennzeichnet, dass** zwischen einem hinteren Säulenabschnitt (16, 17) und einem vorderen Säulenabschnitt (18, 19) eines Seitenwand-Abschnitts (30, 31) des Hardtops (15) jeweils mindestens ein Seitenfenster (27, 28) versenkbar angeordnet ist.

3. Kraftfahrzeug nach einem der vorhergehenden Ansprüche,
**dadurch gekennzeichnet, dass** die Heckscheibe (4, 23) in einem Hohlraum der Heckklappe (3) versenkbar ist.

4. Kraftfahrzeug nach einem der vorhergehenden Ansprüche,
**dadurch gekennzeichnet, dass** ein an das Hardtop (15) angrenzender U-förmiger Bereich (10, 11, 12) einer Karosserie (8) des Kraftfahrzeuges (1) eine Überrollschutzfunktion hat.

5. Kraftfahrzeug nach einem der vorhergehenden Ansprüche,
**dadurch gekennzeichnet, dass** der Kofferraum (7) von einem restlichen Fahrzeuginnenraum (32) durch ein Trennelement (29) abgetrennt ist.

6. Kraftfahrzeug nach Anspruch 5,
**dadurch gekennzeichnet, dass** das Trennelement (29) eine transparente Scheibe oder ein aufrollbares Trenn-Netz ist.

7. Kraftfahrzeug nach einem der vorhergehenden Ansprüche,
**dadurch gekennzeichnet, dass** die Betätigung zum Absenken der Heckscheibe (4, 23), der Seitenfenster (27, 28) und/oder zum Verschieben des Dachteiles (26) automatisch und/oder manuell erfolgt.

## Claims

1. A motor vehicle with a steep back (2), wherein the steep back (2) comprises a tailgate (3) formed with a rear window (4), a luggage boot (7), a roof (10, 22, 26) and a side frame (9) comprising a top region and a bottom region, wherein the roof (10, 22, 26) is connected to the bottom region of the side frame (9) by columns (11, 12; 16, 17) in the top region, wherein the boot (7) is covered by a removable hard top (15) comprising a roof portion (22) and two adjoining side-wall portions (30, 31),
**characterised in that** the hard top (15) comprises a roof part (26) movable over the roof portion (22).

2. A vehicle according to claim 1 or claim 2,
**characterised in that** at least one lowerable side window (27, 28) is disposed between a rear column portion (16, 17) and a front column portion (18, 19) of a side-wall portion (30, 31) of the hard top (15).

3. A vehicle according to any of the preceding claims,
**characterised in that** the rear window (4, 23) can be lowered into a cavity in the tailgate (3).

4. A vehicle according to any of the preceding claims,
**characterised in that** a U-shaped region (10, 11, 12) of the body (8) of the vehicle (1) adjoining the hard top (15) is a roll-over protective structure.

5. A vehicle according to any of the preceding claims,
**characterised in that** the boot (7) is separated from the remainder of the vehicle interior (32) by a partition (29).

6. A vehicle according to claim 5,
**characterised in that** the partition (29) is a transparent pane or a roll-up lattice.

7. A vehicle according to any of the preceding claims,
**characterised in that** the rear window (4, 23) or the side windows (27, 28) are lowered and/or the roof part (26) is moved automatically and/or manually.

## Revendications

1. Véhicule break dont l'arrière droit (2) comporte un volet arrière (3) muni d'une lunette arrière (4), d'un coffre (7), d'un toit (10, 22, 26) et d'un cadre latéral (9) ayant une zone supérieure et une zone inférieure, le toit (10, 22, 26) étant relié par des colonnes (11, 12, 16, 17) de la zone supérieure à la zone inférieure du cadre latéral (9), le coffre (7) étant couvert par un toit amovible (15) ayant un segment de toit (22) et deux segments de paroi latérale (30, 31) sur ce segment de toit,
**caractérisé en ce que**
le toit amovible (15) est muni d'une partie (26) qui peut coulisser vers l'avant sur le segment de toit (22).

2. Véhicule automobile selon la revendication 1,
**caractérisé par**
au moins une fenêtre latérale (27, 28) entre le segment de colonne arrière (16, 17) et un segment de colonne avant (18, 19) d'un segment de paroi latérale (30, 31) du toit amovible (15), ces fenêtres latérales pouvant être dégagées vers le bas.

3. Véhicule automobile selon l'une des revendications précédentes,
**caractérisé en ce que**
la lunette arrière (4, 23) peut être escamotée dans une cavité du volet arrière (3).

4. Procédé selon l'une des revendications précédentes,
**caractérisé par**
une zone en forme de grand U (10, 11, 12) de la carrosserie (8) du véhicule (1) adjacente au toit amovible (15) a une fonction de protection contre le retournement.

5. Véhicule automobile selon l'une des revendications précédentes,
**caractérisé en ce que**
le coffre (7) est séparé de la partie restante de l'habitacle (32) par un élément de séparation (29).

6. Véhicule automobile selon la revendication 5,
**caractérisé en ce que**
l'élément de séparation (29) est une vitre transparente ou un filet de séparation roulable.

7. Véhicule automobile selon l'une des revendications précédentes,
**caractérisé en ce que**
l'actionnement de la lunette arrière (4, 23), des fenêtres latérales (27, 28) et/ou le coulissement de la partie toit (26) se font automatiquement et/ou manuellement.
